# EUROPEAN PATENT SPECIFICATION

(11) **EP 4 440 164 B1**
(45) Date of publication and mention of the grant of the patent: **03.06.2026**
(21) Application number: 22898923.2
(22) Date of filing: 14.11.2022
(51) Int. Cl.: H04W 4/38, H04W 4/029, H04B 17/318, H04L 9/40, H04W 12/06, H04W 12/50, H04W 84/12, H04W 88/08, G08B 13/24, H04W 84/18

(54) **WIRELESS LAN SIGNAL-BASED OPERATION DETECTION METHOD AND DEVICE**
VERFAHREN UND VORRICHTUNG ZUR ERKENNUNG VON SIGNALEN EINES DRAHTLOSEN LAN-SYSTEMS
PROCÉDÉ ET DISPOSITIF DE DÉTECTION DE FONCTIONNEMENT BASÉS SUR UN SIGNAL DE RÉSEAU LOCAL SANS FIL

(30) Priority: 24.11.2021 KR 20210163303; 03.05.2022 KR 20220054677
(43) Date of publication of application: 02.10.2024
(73) Proprietor: Wilus Institute of Standards and Technology Inc., Gyeonggi-do 13595 (KR)
(72) Inventor: HWANG, Hwanwoong, Seongnam-si Gyeonggi-do 13595 (KR); ZEBULON, Asaf, Seongnam-si Gyeonggi-do 13595 (KR); PRANAYA, Fathan Adi, Seongnam-si Gyeonggi-do 13595 (KR); SON, Juhyung, Seongnam-si Gyeonggi-do 13595 (KR); KWAK, Jinsam, Seongnam-si Gyeonggi-do 13595 (KR)
(74) Representative: Schmitt-Nilson Schraud Waibel Wohlfrom Patentanwälte Partnerschaft mbB
(86) International application number: PCT/KR2022/017884
(87) International publication number: WO 2023/096241

(56) References cited:
- KR-B1- 102 050 648
- US-A1- 2017 359 724
- US-A1- 2021 211 152
- US-A1- 2021 288 779
- US-A1- 2021 311 162
- US-B2- 11 087 604

## Description

### Technical Field

The present invention relates to a method and a device for detecting motion by using a wireless LAN signal.

### Background Art

With the recent proliferation of mobile devices, wireless LAN technologies that can provide fast wireless Internet services to these devices have attracted significant attention. Wireless LAN technology enables mobile devices such as smartphones, smart pads, laptop computers, portable multimedia players, and embedded devices to wirelessly access the Internet in homes, offices, or specific service areas based on wireless communication technology at short distances.

With the proliferation of wireless LANs, research is also being conducted to detect motion around an AP and a station by using signals exchanged between the AP and station. Motion detection using a wireless LAN signal has the advantage of minimizing unnecessary privacy exposure, as the motion detection does not require direct photographing of a user. However, opinions have been raised regarding the need for further research on a method for improving the accuracy of motion detection and a method for avoiding interference with existing wireless LAN communications.

US 2017/0359724 A1 discloses a method that includes sending identification information for a mobile hotspot device from that device to a cloud-based computer processing system, sending identification information for a security monitoring device from that device to an app on a user's mobile device, prompting the user, via the app, to provide the identification information for the mobile hotspot device to the user's mobile device, and sending a pairing request from the app to the cloud-based computer processing system. The pairing request includes the identification information for the mobile hotspot device that was provided by the user and the identification information for the security monitoring device.

US 2021/0288779 A1 discloses systems, methods, and devices related to WLAN sensing sounding. A device may identify a sensing null data packet (NDP) request frame received from a second device, the sensing NDP request frame associated with performing a wireless local area network channel sounding procedure; identify transmit parameters included in a transmit control field of the sensing NDP request frame; generate an NDP frame using the transmit parameters; and send, in response to the sensing NDP request frame, the NDP frame to the second device.

KR 102 050 648 B1 discloses an electronic device that can be configured to receive registration data for a local network device, receive registration data for an electronic device, receive a request to pair the local network device and the electronic device, where the request to pair the devices includes a pairing code, and allow the pairing if the registration data for the local network device, the registration data for the electronic device, and the pairing code satisfies predetermined conditions.

### Disclosure of Invention

### Technical Problem

An aspect of an embodiment of the present invention is to provide a method and a device for detecting motion by using a wireless LAN signal.

### Solution to Problem

Embodiments of the invention include a server for receiving detected information from an access point in accordance with claim 1 and a method of operating a server for receiving detected information from an access point in accordance with claim 11. Further embodiments of the invention are given in the dependent claims.

In accordance with an embodiment of the present invention, a server for receiving detected information from an access point (AP) for performing motion detection by using a wireless LAN signal includes a memory and a processor. The processor is configured to receive, from the AP, an identifier of a basic service set (BSS) operated by the AP, receive, from a user application, an identifier of a BSS associated with a station in which the user application operates, pair the AP with a user of the user application in case that the identifier of the BSS received from the AP is identical to the identifier received from the user application, and transmit, to the user application, information about a motion detection result received from the AP.

The processor may be configured not to pair the AP with the user of the user application in case that an administrator ID and a password transmitted by the user application do not match an administrator ID and a password of the AP.

The identifier of the BSSID may be a BSSID.

The processor may be configured to receive, from the AP, a user identifier of the user paired with the AP along with the motion detection result.

The processor may be configured to pair, in case that the AP is a router AP configured to manage a mesh network, all APs included in the mesh network with one user.

The processor may be configured to, in case that the AP is a router AP configured to manage a mesh network, receive, from the router AP, not only a BSSID operated by the router AP but also a BSSID operated by an extender AP connected to the router AP, receive the BSSID operated by the extender AP from the extender AP, and pair the extender AP with a user paired with the router AP that has transmitted a BSSID identical to the BSSID received from the extender AP.

The processor may be configured to transmit an authentication code to an application of the user paired to the AP in case that a user application of a user other than the user paired with the AP requests pairing with the AP from the server, and pair the other user with the AP in case that the user application of the other user transmits the authentication code.

The processor may be configured to set at least one of multiple stations associated with the AP as a sensing node configured to transmit a measurement result underlying motion detection, and set a threshold value for determining a motion detection level based on a place in which the sensing node is located.

The processor may be configured to designate, in case that a first AP, which is one of multiple stations associated with the AP, has been set as a sensing node configured to transmit a measurement result underlying motion detection, a second AP instead of the first AP as the sensing node based on a magnitude of an RSSI of a signal transmitted by the first AP.

The processor may be configured to designate the second AP instead of the first AP as the sensing node in case that the first AP, which is one of the multiple stations associated with the AP, has been set as the sensing node configured to transmit a measurement result underlying motion detection and that the magnitude of the RSSI of the signal transmitted by the first AP is less than a predetermined threshold value.

In accordance with to an embodiment of the present invention, an operation method of a server for receiving detected information from an access point (AP) for performing motion detection by using a wireless LAN signal may include: receiving, from the AP, an identifier of a basic service set (BSS) operated by the AP; receiving, from a user application, an identifier of a BSS associated with a station in which the user application operates; pairing the AP with a user of the user application in case that the identifier of the BSS received from the AP is identical to the identifier received from the user application; and transmitting, to the user application, information about a motion detection result received from the AP.

The pairing of the AP with the user of the user application may include not pairing the AP with the user of the user application in case that an administrator ID and a password transmitted by the user application do not match an administrator ID and a password of the AP.

The identifier of the BSSID may be a BSSID.

The operation method may further include receiving, from the AP, a user identifier of the user paired with the AP along with the motion detection result.

The pairing of the AP with the user of the user application may include pairing, in case that the AP is a router AP configured to manage a mesh network, all APs included in the mesh network with one user.

The pairing of all the APs included in the mesh network with the one user may include: in case that the AP is a router AP configured to manage a mesh network, receiving, from the router AP, not only a BSSID operated by the router AP but also a BSSID operated by an extender AP connected to the router AP; receiving the BSSID operated by the extender AP from the extender AP; and pairing the extender AP with a user paired with the router AP that has transmitted a BSSID identical to the BSSID received from the extender AP.

The operation method may further include: transmitting an authentication code to an application of the user paired to the AP in case that a user application of a user other than the user paired with the AP requests pairing with the AP from the server; and pairing the other user with the AP in case that the user application of the other user transmits the authentication code.

The operation method may further include: setting at least one of multiple stations associated with the AP as a sensing node configured to transmit a measurement result underlying motion detection; and setting a threshold value for determining a motion detection level based on a place in which the sensing node is located.

The setting of at least one of the multiple stations associated with the AP as the sensing node configured to transmit the measurement result underlying the motion detection may include designating, in case that a first AP, which is one of the multiple stations associated with the AP, has been set as a sensing node configured to transmit a measurement result underlying motion detection, a second AP instead of the first AP as the sensing node based on a magnitude of an RSSI of a signal transmitted by the first AP.

The designating of the second AP instead of the first AP as the sensing node may include designating the second AP instead of the first AP as the sensing node in case that the first AP, which is one of the multiple stations associated with the AP, has been set as the sensing node configured to transmit the measurement result underlying the motion detection and that the magnitude of the RSSI of the signal transmitted by the first AP is less than a predetermined threshold value.

### Advantageous Effects of Invention

An embodiment of the present invention provides a method and a device for detecting motion by using a wireless LAN signal.

### Brief Description of Drawings

FIG. 1 illustrates a system for detecting a user's motion by using a wireless LAN signal according to an embodiment of the present invention.
FIG. 2 illustrates a user-AP pairing procedure according to an embodiment of the present invention.
FIG. 3 illustrates a user-AP pairing procedure according to another embodiment of the present invention.
FIG. 4 illustrates a procedure for changing the name and location information of a station associated with an AP according to an embodiment of the present invention.
FIG. 5 illustrates a procedure for selecting a sensing node according to an embodiment of the present invention.
FIG. 6 illustrates a procedure for showing a motion detection result according to an embodiment of the present invention.
FIG. 7 illustrates a procedure for setting an alarm for motion detection according to an embodiment of the present invention.
FIG. 8 illustrates a procedure for changing a previously paired AP to a new user according to an embodiment of the present invention.
FIG. 9 illustrates a mesh network using multiple access points.
FIG. 10 illustrates a user-AP interworking procedure in a mesh network according to an embodiment of the present invention.
FIG. 11 illustrates mesh network management according to an embodiment of the present invention.
FIG. 12 illustrates a motion detection result request procedure in a mesh network according to an embodiment of the present invention.
FIG. 13 illustrates the operation of an AP in a user-AP pairing procedure according to an embodiment of the present invention.
FIG. 14 illustrates the operation of a router AP in a user-AP pairing procedure in a mesh network according to an embodiment of the present invention.

### Best Mode for Carrying out the Invention

The terms used in the specification are general terms that are currently widely used as much as possible while considering the function in the present invention, but may vary depending on the intent of those skilled in the art, custom, or the emergence of new technology. In addition, in a certain case, there are terms arbitrarily selected by the applicant, in which case the meaning thereof will be described in the corresponding description of the invention. Therefore, the terms used in the specification should be interpreted based on the substantive meaning of the terms and the overall content of the specification, not merely the names of the terms.

Throughout the specification, when an element is described as being "connected" to another element, this includes not only the case in which the elements are "directly connected" to each other but also the case in which the elements are "electrically connected" to each other with another element interposed therebetween. Furthermore, when an element is described as "including" a specific element, this implies that other elements may be added, but not excluded, unless specifically stated otherwise. In addition, the terms "equal to or greater than" or "equal to or less than" with respect to a specific threshold value may be replaced by "greater than" or "less than", respectively, as appropriate, depending on embodiments.

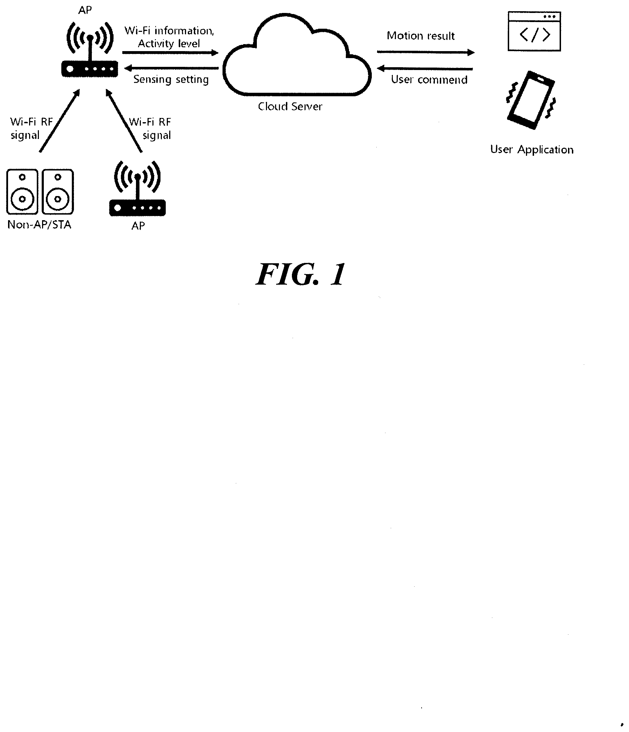

FIG. 1 illustrates a system for detecting a user's motion by using a wireless LAN signal according to an embodiment of the present invention.

Various stations may be associated with an AP. The AP may detect motion around the AP and the stations based on information about RF signal measurement results transmitted by the stations. Specifically, when motion occurs around the AP and the stations, signal measurement results from the station are changed. Therefore, the AP may detect the motion around the AP and the stations by tracking changes in the signal measurement results of the stations. In this case, the signal measurement results of the stations may be channel state information (CSI). In the specification, a station that performs signal measurement is referred to as a sensing node.

The AP calculates the degree of motion detected based on the received signal measurement results. The degree of motion is referred to as an activity level. The AP transmits the calculated activity level to a cloud server. In this case, the AP may also transmit wireless LAN information related to the signal measurement. The wireless LAN information may include at least one among information about an RF signal used for signal measurement, information about a basic service set (BSS) being operated by the AP, and information about a station associated with the AP.

A user application may display information received from the cloud server based on user input. Specifically, the user application may display an activity level calculated from a signal measurement result received from a sensing node. The user application may be a mobile application or a web application operating on a smartphone.

The cloud server stores data received from the AP. In addition, the cloud server processes a request from the user application and transmits a response to the request from the user application. In addition, the cloud server may forward, to the AP, command for the AP transmitted by the user application. A user can identify information about the station associated with the AP through the user application. The information about the station may include at least one of the name and location of the station.

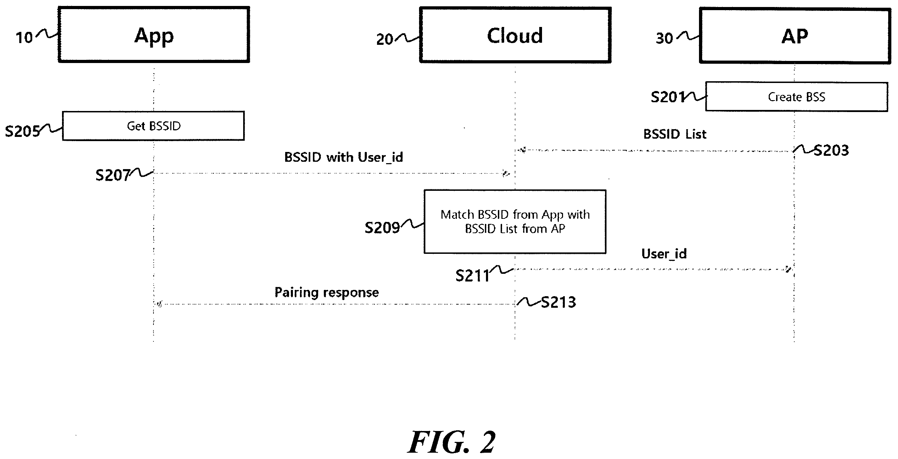

It is necessary to prevent a user from accessing information about another user AP or an activity level detected by the AP. To this end, user-AP pairing is performed to establish a connection between the user and the user's AP. An administration server of a motion detection system transmits information about a motion detection result detected by the AP to the user application of a user to whom the AP is paired. This will be described with reference to FIGS. 2 to 3.

FIG. 2 illustrates a user-AP pairing procedure according to an embodiment of the present invention.

An AP 30 may generate and operate one or more BSSs (S201). The AP 30 transmits BSS identifiers (BSSIDs) of all BSSs operated by the AP 30 to a cloud server 20 (S203).

In a user-AP pairing procedure, a user application 10 transmits, to the cloud server 20, a BSSID of a BSS operated by the AP 30 associated with a station in which the user application is operating (S205, S207). In addition, the user application 10 uploads a user identifier (User_id) of a user to the cloud server (S207).

The cloud server 20 determines whether the BSSID received from the user application 10 matches the BSSID received from the AP 30 (S209). When the BSSID received from the user application 10 matches the BSSID received from the AP 30, the cloud server 20 pairs the user identifier (User_id) of the user application 10 with the AP which transmitted the BSSID that matches the BSSID sent by the user application 10 (S209). Furthermore, the cloud server 20 transmits, to the AP 30, the user identifier (User_id) of the user paired with the AP 30 (S211). Furthermore, the cloud server 20 notifies the user application 10 of the pairing result (S213). When the BSSID received from the user application 10 does not match the BSSID received from the AP 30, the cloud server 20 does not perform the pairing between the user identifier (User_id) of the user application 10 and the AP. Furthermore, the cloud server 20 notifies the user application 10 of the pairing failure. In these embodiments, a separate identifier enabling identification of the AP may be used instead of the BSSID.

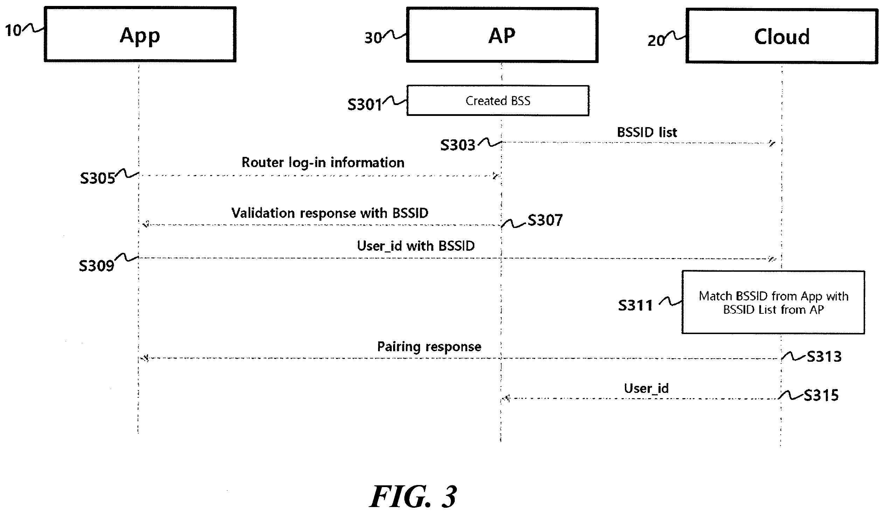

In the embodiment previously described with reference to FIG. 2, a user who is not an administrator of the AP may also attempt to pair a user with the AP. Therefore, an embodiment to prevent this is needed. This will be described with reference to FIG. 3.

FIG. 3 illustrates a user-AP pairing procedure according to another embodiment of the present invention.

In a specific embodiment, when a user application receives a validation response from an AP associated with a station in which the user application operates, the user application may request pairing between a user and the AP. This embodiment may prevent a user who is not an administrator of the AP from monitoring motion detection information collected from the AP. Specifically, the AP 30 may generate and operate one or more BSSs (S301). The AP 30 transmits BSS identifiers (BSSIDs) of all BSSs operated by the AP 30 to the cloud server 20 (S303).

The user application 10 may transmit information required for authentication to the AP 30 to request a validation response (S305). In this case, the information required for authentication may be an administrator ID and a password of the AP 30. The AP 30 may receive the information required for authentication from the user application 10, and when the received information required for authentication is valid, the AP 30 may transmit the validation response to the user application 10. Specifically, the AP 30 may receive an administrator ID and a password from the user application 10, and when the received administrator ID and password are valid, the AP 30 may transmit the validation response to the user application 10 (S307). In this case, the AP 30 may transmit a BSSID of a BSS, to which the station in which the user application 10 operates belongs, along with the valid response.

The user application 10 having received the validation response transmits, to the cloud server 20, the BSSID of the BSS operated by the AP 30 associated with the station in which the user application is operating (S309). In addition, the user application 10 uploads a user identifier (User_id) of a user to the cloud server (S309).

The cloud server 20 determines whether the BSSID received from the user application 10 matches the BSSID received from the AP 30 (S311). When the BSSID received from the user application 10 matches the BSSID received from the AP 30, the cloud server 20 pairs the user identifier (User_id) of the user application 10 with the AP which transmitted the BSSID that matches the BSSID transmitted by the user application 10 (S313). Furthermore, the cloud server 20 transmits to the AP 30 the user identifier (User_id) of the user paired with the AP 30 (S315). Furthermore, the cloud server 20 notifies the user application 10 of the pairing result (S313). When the BSSID received from the user application 10 does not match the BSSID received from the AP 30, the cloud server 20 does not perform the pairing between the user identifier (User_id) of the user application 10 and the AP. Furthermore, the cloud server 20 notifies the user application 10 of the pairing failure. In these embodiments, a separate identifier enabling identification of the AP may be used instead of the BSSID.

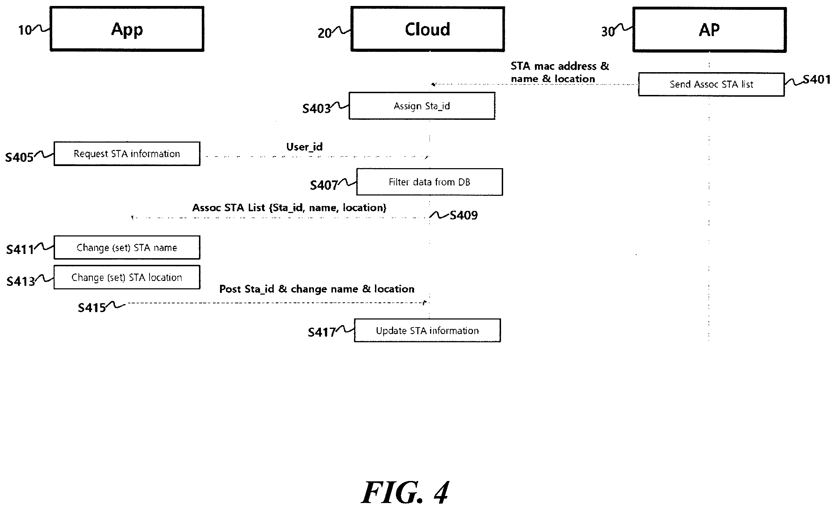

In order for the user to manage stations with respect to motion detection, such as determining sensing nodes, and to easily monitor an activity level, the user needs to store and manage information about stations associated with the AP. This will be described with reference to FIG. 4.

FIG. 4 illustrates a procedure for changing the name and location information of a station associated with an AP according to an embodiment of the present invention.

A user may configure information about a station associated with an AP. Specifically, the user may configure the location and name of the station associated with the AP. The AP 30 transmits information about a station associated with the AP 30 to the cloud server (S401). In this case, the information about the station may include at least one among a MAC address, a name, and a location of the station. Furthermore, when the user does not set the location of the station, the location of the station may be set to a default location. Also, when the user does not set the name of the station, the name of the station may be set to a name that the station transmitted to the AP.

The cloud server 20 assigns a unique identifier to the station (S403).

The user application 10 makes a request to the cloud server 20 for the information of a station associated with the AP 30 paired with the user of the user application 10 (S405). In this case, the user application 10 may transmit a user identifier (User_id) of the user.

The cloud server 10 filters the information about the station associated with the AP paired with the user who requested the information about the station (S407). Specifically, the cloud server 10 may perform the filtering by using the user ID in a database storing the station associated with the AP. The cloud server 10 transmits the filtered information of the station to the user application 10 (S409).

The user application 10 may receive, from the user, an input requesting a station information configuration (S411, S413). The user application 10 may transmit the station information configuration received from the user to the cloud server 20 (S415).

The cloud server 20 updates station information in response to the information configuration request received from the user application 10 (S417).

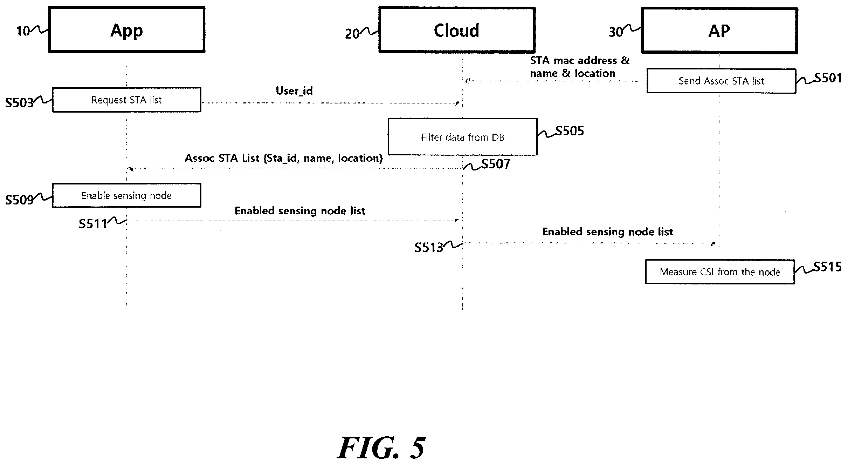

When an AP receives information about RF signal measurement results from all stations associated with the AP, this may reduce the communication efficiency of a BSS operated by the AP. Therefore, the AP may only receive information about an RF signal measurement result from a station designated as a sensing node. This will be described with reference to FIG. 5.

FIG. 5 illustrates a procedure for selecting a sensing node according to an embodiment of the present invention.

The AP 30 transmits information about a station associated with the AP 30 to the cloud server (S501). The user application 10 makes a request to the cloud server 20 for the information about the station associated with the AP paired with a user (S503). In this case, the user application 10 may transmit a user identifier (User_id) of the user to the cloud server 20. The user application 10 receives an input designating a sensing node from the user (S509). The user application 10 transmits the input designating the sensing node to the cloud server 20 (S511). In this case, the user application 10 may transmit information about all sensing nodes to the cloud server 20. In another specific embodiment, the user application 10 may transmit, to the cloud server 20, information about a sensing node for which an update is requested.

The cloud server 20 transmits the updated information about the sensing node to the AP 30.

The AP 30 receives information about an RF signal measurement result from the sensing node based on the updated information about the sensing node.

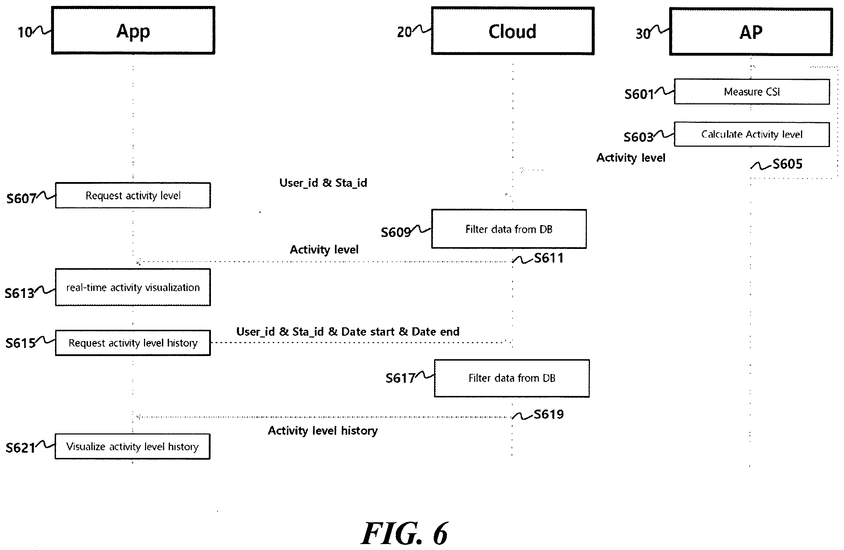

FIG. 6 illustrates a procedure for showing a motion detection result according to an embodiment of the present invention.

The cloud server 20 stores an activity level received from an AP. In this case, the cloud server 20 may store the activity level for a predetermined period of time. The AP 30 periodically receives an RF signal measurement result from a sensing node (S601). Furthermore, the AP 30 estimates the activity level based on the received RF signal measurement result (S603). The AP 30 transmits the estimated activity level to the cloud server (S605). In a specific embodiment, the cloud server 20 may designate a period at which the sensing node measures an RF signal. Furthermore, the cloud server 20 may designate a period at which the sensing node reports the RF signal measurement result. For example, the cloud server 20 may reduce the period at which the sensing node measures an RF signal when traffic transmitted by a BSS of the sensing node increases. Furthermore, the cloud server 20 may reduce the period at which the sensing node reports the RF signal measurement result when traffic transmitted by the BSS of the sensing node increases.

The user application 10 makes a request to the cloud server 20 for the activity level estimated by the AP paired with a user (S607). When the user application makes a request to the cloud server 20 for the activity level estimated by the AP paired with the user, the user application 10 may transmit a user identifier (User_id) of the user to the cloud server 20. Furthermore, when the user application makes a request to the cloud server 20 for the activity level estimated by the AP paired with the user, the user application 10 may transmit, to the cloud server 20, an identifier of the sensing node that measured the activity level. The cloud server 20 filters the activity level estimated by the AP paired with the user of the user application 10 from a database in which activity levels are stored (S609). The cloud server 20 transmits, to the user application 10, the activity level estimated by the AP paired with the user of the user application 10 (S611). In this case, when the user application 10 has indicated a specific sensing node, the cloud server 20 may transmit, to the user application 10, an activity level estimated based on the result of RF signal measurement performed by the specific sensing node. The user application 10 may receive the activity level and visualize the activity level in real time (S613).

Furthermore, the user application 10 may make a request to the cloud server 20 for the activity level estimated by the AP paired with the user during a specific time period (S615). The specific time period may be indicated by a start time and an end time. The cloud server 20 filters the activity level estimated by the APs paired with the user of the user application 10 during the specific time period from the database in which the activity levels are stored (S617). The cloud server 20 transmits the user application 10 the activity level estimated by the AP paired with the user of the user application 10 during the specific time period (S619). In this case, when the user application 10 has indicated a specific sensing node, the cloud server 20 may transmit, to the user application 10, an activity level estimated based on the result of RF signal measurement performed by the specific sensing node during the specific time period. The user application 10 may receive and visualize the detected activity levels during the specific time period (S621).

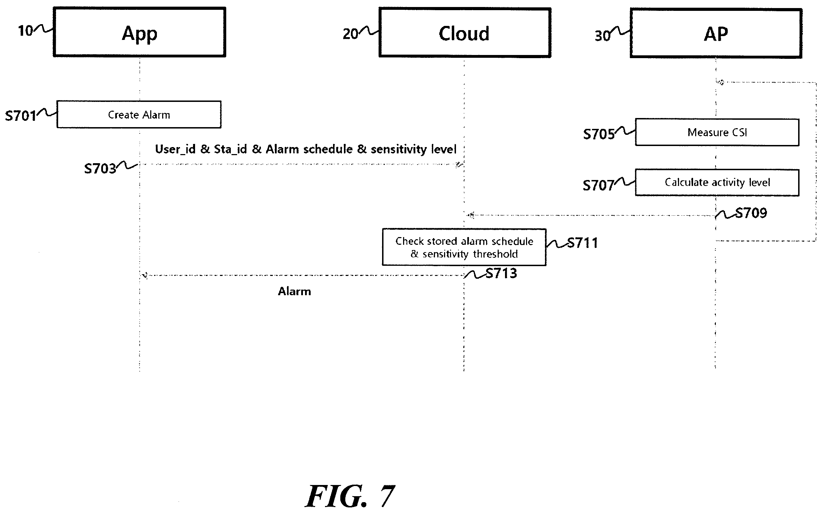

A user application may set an alarm for motion detection. Specifically, the user application may be configured to trigger an alarm when motion equals or exceeds a reference value under a specific condition. Thus, when motion is detected in a user-configured environment a user may receive an alarm for the motion detection. This will be described with reference to FIG. 7.

FIG. 7 illustrates a procedure for setting an alarm for motion detection according to an embodiment of the present invention.

When an activity level equal to or greater than a designated threshold value is estimated under a condition designated by the user application 10, the cloud server 20 may transmit an alarm to the user application 10. In this case, the designated condition may include a sensing node. Specifically, the cloud server 20 may transmit an alarm to the user application 10 when an activity level estimated based on the result of RF signal measurement performed by the specific sensing node is estimated to be equal to or greater than the designated threshold value. Furthermore, the designated condition may include a specific time interval. Specifically, when an activity level estimated in the specific time interval is equal to or greater than the designated threshold value, the cloud server 20 may transmit an alarm to the user application 10. Furthermore, the threshold may be set for each sensing node. Furthermore, a time interval for receiving the alarm may be set for each sensing node. In a specific embodiment, a threshold value of a sensing node may be set for each place where the sensing node is located. Furthermore, a time interval for receiving an alarm may be set for each palace where the sensing node is located. This is because the role and characteristics of motion detection may vary depending on the places where the sensing node is located.

In the embodiment of FIG. 7, the user application 10 receives an alarm setting input from a user and generates an alarm (S701). The user application 10 transmits information necessary for alarm setting to the cloud server (S703). As described above, the information necessary for alarm setting may include at least one among information about a designated sensing node, information about a designated time interval, and information about a designated threshold value.

The AP 30 estimates an activity level based on a RF signal measurement result received from a sensing node (S705, S707). The AP 30 transmits the estimated activity level to the cloud server 20 (S709).

When the estimated activity level satisfies a set condition, the cloud server 20 transmits an alarm to the user application 10.

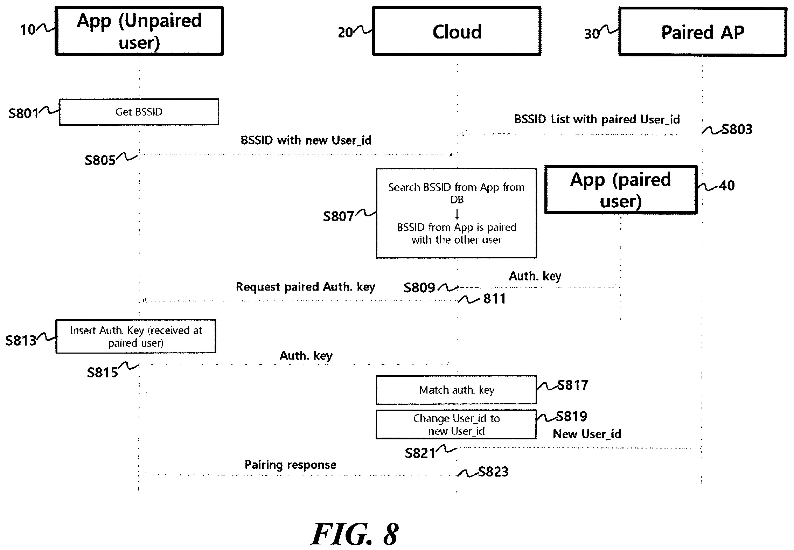

A user application 10 of a user other than the user paired with the AP 30 may request the activity level estimated by the AP. In this case, the cloud server 20 may reject the request. However, since the user of the AP 30 may change, a method to support this is needed. This will be described with reference to FIG. 8. The embodiment described with reference to FIG. 8 may be applied to all the user-user application pairing embodiments described with reference to FIGS. 2 and 3.

FIG. 8 illustrates a procedure for changing a previously paired AP to a new user according to an embodiment of the present invention.

A cloud server 20 may transmit an authentication key to a user application 10 of an existing user. When the cloud server 20 receives, from a user application 10 of a new user, an authentication key that is identical to the authentication key transmitted to the user application 10 of the existing user, the cloud server 20 may pair the new user to an AP 30. In this case, the authentication key may be generated using a random number. Furthermore, the authentication key may be a unique value that is valid only for a predetermined time from when the authentication key has been generated.

In the embodiment of FIG. 8, a user application 10 of an unpaired user acquires a BSSID from an AP (S801), and transmits the BSSID along with a user identifier (User_id) of the user to a cloud server 20 (S805). A paired AP 30 transmit, periodically or at the time of BSS updating, a BSSID list including a BSSID of a BSS operated by the paired AP 30 (S803). In this case, the period may be designated by the cloud server 20. Specifically, the cloud server 20 may designate a period at which the BSSID list is transmitted on per-time basis. For example, the cloud server 20 may designate a shorter period at which the BSSID list is transmitted during the evening hours than a period at which the BSSID list is transmitted during the daytime hours. Furthermore, the period may be designated by the user.

The cloud server 20 searches for the BSSID transmitted by the user application 10 of the unpaired user and determines that the BSSID is paired with a user other than the unpaired user (S807). In this case, the cloud server 20 transmits an authentication key to a user application 40 of the user paired with the AP 30. Furthermore, the cloud server 20 requests an authentication key from the user application 10 of the unpaired user (S809).

The user application 10 of the unpaired user receives an authentication key request from the cloud server 20. Furthermore, the unpaired user application 10 requests the user to input an authentication key. The user application 10 of the unpaired user receives the authentication key from the user (S813), and transmits the received authentication key to the cloud server 20 (S815).

The cloud server 20 determines whether the authentication key received from the user application 10 of the unpaired user matches the authentication key transmitted by the cloud server 20 to the user application 40 of the paired user (S817). When the authentication key received from the user application 10 of the unpaired user matches the authentication key transmitted by the cloud server 20 to the user application 40 of the paired user, the cloud server 20 pairs the unpaired user with the AP 30 (S819). Furthermore, the cloud server 20 transmits, to the AP 30, a user identifier (User_id) of the newly paired user (S821). When the authentication key received from the user application 10 of the unpaired user does not match the authentication key transmitted by the cloud server 20 to the user application 40 of the paired user, the cloud server 20 does not perform pairing.

The cloud server 20 transmits the pairing result to the user application 10 of the unpaired user (S823).

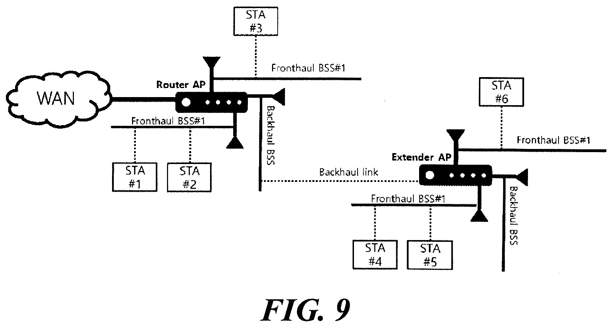

Embodiments of the present invention may also be applied to a mesh network. This will be described with reference to FIGS. 9 to 14.

FIG. 9 illustrates a mesh network using multiple access points.

A mesh network includes multiple APs. The multiple APs may be classified into a router AP and an extender AP. The router APs may be replaced by an APs including a controller and an agent, which are logical entities. In addition, the extender AP may be replaced by an AP that includes only an agent. The mesh network may include one router AP and multiple extender APs. The router AP and the extender AP are connected to each other by a backhaul link, and the backhaul link may be formed through a wireless LAN or Ethernet. The router AP and the extender AP may communicate with each other via the backhaul link. In addition, each of the router AP and the extender AP may operate a fronthaul BSS with which non-AP stations may be associated. The router AP may operate both a fronthaul BSS and a backhaul BSS. The extender AP may recognize only a BSSID operated by the extender AP. The router AP may recognize a BSSID of the extender AP connected via a backhaul link, as well as a BSSID operated by the router AP. As a result, the router AP may recognize BSSIDs of all BSSs in the mesh network.

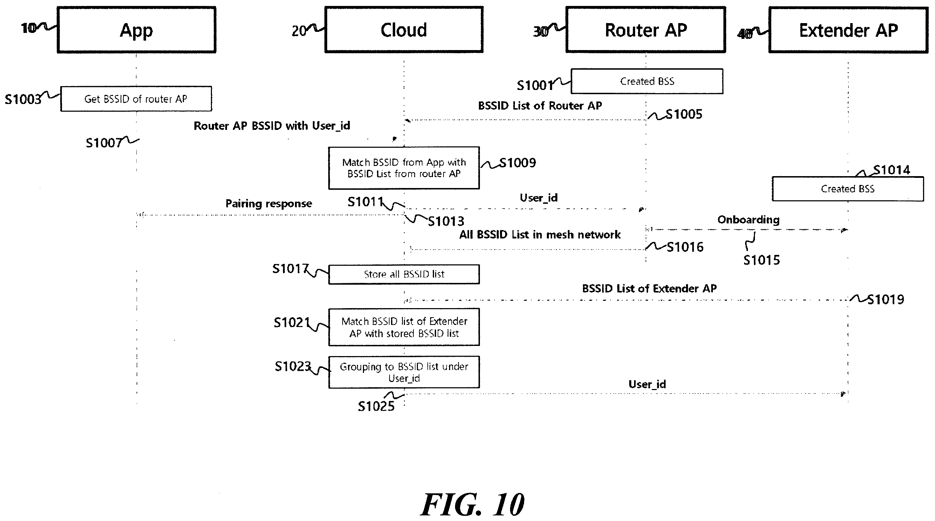

FIG. 10 illustrates a user-AP interworking procedure in a mesh network according to an embodiment of the present invention.

The user-AP interworking procedure of the mesh network, described with reference to FIG. 10, may be applied to the above-described user-AP pairing embodiments, for example, the embodiments described with reference to FIGS. 2, 3, and 8.

A router AP 30 may generate and operate one or more BSSs (S1001). The router AP 30 transmits BSS identifiers (BSSIDs) of all BSSs operated by the router AP 30 to a cloud server 20 (S1005).

In the user-AP pairing procedure, a user application 10 transmits, to the cloud server 20, a BSSID of a BSS operated by the AP associated with the station in which the user application is operating (S1003, S1007). In addition, the user application 10 uploads a user identifier (User_id) of a user to the cloud server (S1007).

The cloud server 20 determines whether the BSSID received from the user application 10 matches the BSSID received from the router AP 30 (S1009). When the BSSID received from the user application 10 matches the BSSID received from the router AP 30, the cloud server 20 pairs the user identifier (User_id) of the user application 10 with the AP that transmitted the BSSID matching the BSSID transmitted by the user application 10. Further, the cloud server 20 transmits, to the AP 30, the user identifier (User_id) of the user paired with the AP 30 (S1011). Furthermore, the cloud server 20 notifies the user application 10 of the pairing result (S1013). When the BSSID received from the user application 10 does not match the BSSID received from the router AP 30, the cloud server 20 does not perform pairing between the user identifier (User_id) of the user application 10 and the AP. Furthermore, the cloud server 20 notifies the user application 10 of the pairing failure. In these embodiments, a separate identifier enabling identification of the AP may be used instead of the BSSID.

An extender AP 40 generates a BSS (S1014) and is onboarded onto the router AP 30 (S1015). The router AP 30 transmits a BSSID list including all BSSIDs within the mesh network to the cloud server 20 (S1016). The cloud server 20 stores the list of BSSIDs received from the router AP 30 (S1017).

Furthermore, the extender AP 40 transmits a BSSID list including a BSSID operated by the extender AP 40 to the cloud server 20. The cloud server 20 determines whether stored BSSID lists includes a BSSID list that includes the BSSID list received from the extender AP 40 (S1021). When the stored BSSID lists includes the BSSID list that includes the list of BSSIDs received from the extender AP 40, the cloud server 20 groups the extender AP 40 into the corresponding BSSID list (S1023). The cloud server 20 transmits, to the extender AP 40, a user identifier (User_id) paired with the BSSID list including the BSSID list received from the extender AP 40.

In FIG. 10, it is described that the router AP 30 is registered in the cloud server 20, and the extender AP 40 is onboarded onto the router AP 30. However, the embodiment described with reference to FIG. 10 may equally apply to the case where the router AP 30 onto which the extender AP 40 is onboarded is registered in the cloud server 20.

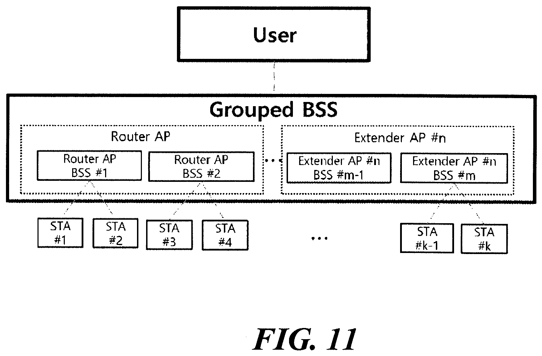

FIG. 11 illustrates mesh network management according to an embodiment of the present invention.

A cloud server may group and manage BSS and station inforamtion received from APs for each previously paired user identifier (User_id). Specifically, the cloud server may store and manage the BSS and station information received from the APs for each user. Thus, the cloud server may pair all APs in a mesh network with one user. The cloud server may assign an independent ID to each of AP in the mesh network, a BSS of the AP, and a station belonging to the BSS. Furthermore, the cloud server may directly access each AP.

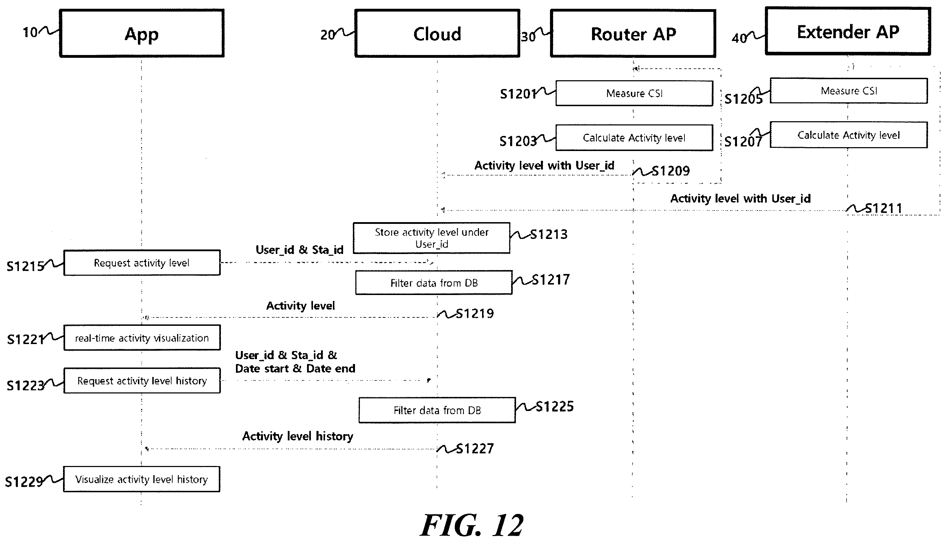

FIG. 12 illustrates a motion detection result request procedure in a mesh network according to an embodiment of the present invention.

The embodiment described with reference to FIG. 12 relates to an operation in which a user application 10 makes a request to a cloud server 20 for information about an activity level, but the embodiment may also be applied to an operation in which the user application 10 makes a request to the cloud server 20 for a specific operation. In this case, the specific operation may include changing station information and setting up a sensing node as described above.

The cloud server 20 stores activity levels received from a router AP 30 and an extender AP 40 (S1213). In this case, the cloud server 20 may store the activity levels for a predetermined period of time. The router AP 30 periodically receives an RF signal measurement result from a sensing node (S1201). Furthermore, the router AP 30 estimates an activity level based on the received RF signal measurement result (S1203). The router AP 30 transmits the estimated activity level to the cloud server (S1209). The extender AP 40 periodically receives an RF signal measurement result from the sensing node (S1205). Furthermore, the extender AP 40 estimates an activity level based on the RF signal measurement result (S1207). The extender AP 40 transmits the estimated activity level to the cloud server (S1211). When the router AP 30 and the extender AP 40 transmit the activity levels to the cloud server, the router AP 30 and the extender AP 40 may transmit the activity levels along with a user identifier (User_id) with which each AP is paired.

The user application 10 makes a request to the cloud server 20 for an activity level estimated by an AP paired with a user (S1215). When the user application makes a request to the cloud server 20 for the activity level estimated by the AP paired with the user, the user application 10 may transmit the user's user identifier (User_id) to the cloud server 20. Furthermore, when the user application makes a request to the cloud server 20 for the activity level estimated by the AP paired with the user, the user application 10 may transmit, to the cloud server 20, an identifier (Sta_id) of a sensing node that measured the activity level. The cloud server 20 filters the activity level estimated by the AP paired with the user of the user application 10 from a database in which activity levels are stored (S1217). The cloud server 20 transmits, to the user application 10, the activity level estimated by the AP paired with the user of the user application 10 (S1219). When the user application 10 has indicated a specific sensing node, the cloud server 20 may transmit, to the user application 10, an activity level estimated based on the result of RF signal measurement performed by the particular sensing node. The user application 10 may receive the activity level and visualize the activity level in real time (S1213). Furthermore, the maximum number of sensing nodes used by the cloud server 20 may be limited to a predetermined number. In another specific embodiment, when a sensing node is designated as a station associated with a first AP, the cloud server 20 may replace the sensing node from the station associated with the first AP to a station associated with a second AP, based on the magnitude of received signal strength indicator (RSSI) of a signal transmitted by the sensing node. For example, when the magnitude of the RSSI of the signal transmitted by the sensing node associated with the first AP is less than a predetermined threshold value, the cloud server 20 may replace the sensing node from the station associated with the first AP to the station associated with the second AP. In another specific embodiment, when a sensing node is designated as a station coupled to the first AP, the cloud server 20 may replace the sensing node from the station associated with the first AP to a station associated with the second AP, based on the amount of traffic transmitted by the sensing node. For example, when the amount of traffic transmitted by the first AP is greater than a predetermined threshold value, the cloud server 20 may replace the sensing node from the station associated with the first AP to the station associated with the second AP.

Furthermore, the user application 10 may make a request to the cloud server 20 for an activity level estimated by the AP paired with the user during a specific time period (S1223). The specific time period may be indicated by a start time and an end time. The cloud server 20 filters the activity level estimated by the AP paired to the user of the user application 10 during the specific time period from a database in which activity levels are stored (S1225). The cloud server 20 transmits, to the user application 10, the activity level estimated by the AP paired with the user of the user application 10 during the specific time period (S1227). In this case, when the user application 10 has indicated a specific sensing node, the cloud server 20 may transmit, to the user application 10, an activity level estimated based on the result of RF signal measurement performed by the specific sensing node during the specific time period. The user application 10 may receive and visualize the activity level detected during the specific time period (S1229).

Visualizing the activity level by the user application, as described above, may include displaying the activity level by the user application by using a table or a graph.

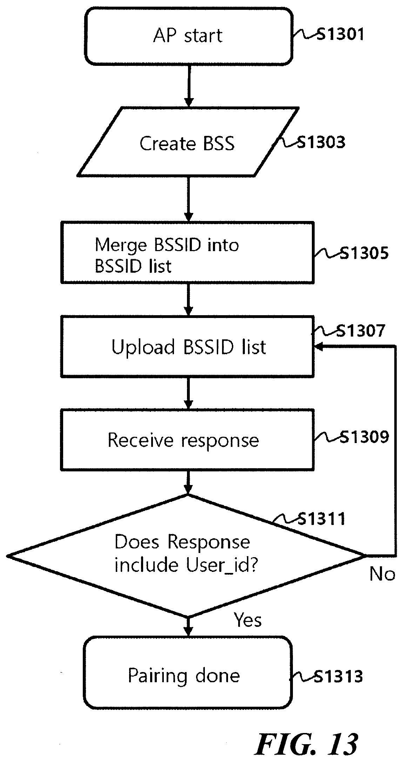

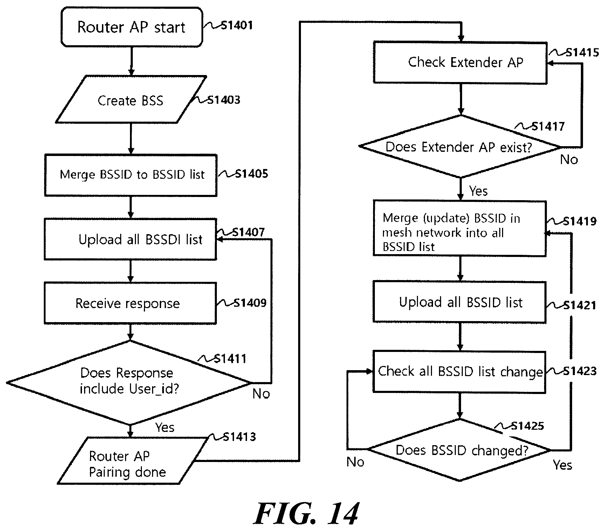

The aforementioned user-AP pairing procedure will be described in detail with reference to FIGS. 13 and 14.

FIG. 13 illustrates the operation of an AP in a user-AP pairing procedure according to an embodiment of the present invention.

When an AP starts operation (S1301), the AP generates a BSS (S1303). The AP uploads BSSIDs of all BSSs operated by the AP to an administration server (S1307). In this case, the AP may generate a BSSID list including the BSSIDs of all BSSs operated by the AP (S1305) and upload the BSSID list to the administration server (S1307). The administration server may be one of a cloud server and a local server. The AP receives a response to the BSSID upload from the administration server (S1309). It is determined whether the response received by the AP includes a user identifier of a user paired with the AP (S1311). When the response received by the AP includes the user identifier of the user paired with the AP, the AP completes the pairing procedure (S1313). When the response received by the AP does not include the user identifier of the user paired with the AP, the AP may re-upload the BSSIDs of all BSSs operated by the AP to the administration server. In this case, the AP may periodically upload the BSSIDs of all BSSs operated by the AP to the administration server until the AP receives a response that includes the user identifier of the user paired with the AP.

FIG. 14 illustrates the operation of a router AP in a user-AP pairing procedure in a mesh network according to an embodiment of the present invention.

When a router AP starts operation (S1401), the router AP generates a BSS (S1403). The router AP uploads BSSIDs of all BSSs operated by the router AP to an administration server (S1407). The router AP may generate a BSSID list including the BSSIDs of all BSSs operated by the router AP (S1405), and upload the BSSID list to the administration server (S1407). The administration server may be one of a cloud server and a local server. The router AP receives a response to the BSSID upload from the administration server (S1409). It is determined whether the response received by the router AP includes a user identifier of a user paired with the AP (S1411). When the response received by the router AP includes the user identifier of the user paired to the AP, the router AP completes the pairing procedure (S1413). When the response received by the router AP does not include the user identifier of the user paired with the AP, the router AP may re-upload the BSSIDs of all BSSs operated by the router AP to the administration server. In this case, the router AP may periodically upload the BSSIDs of all BSSs operated by the router AP to the administration server until the router AP receives a response that includes the user identifier of the user paired with the router AP.

The router AP may identify an extender AP connected via backhaul (S1415, S1417). When there is an extender AP connected to the router AP, the router AP may transmit, to the cloud server, the BSSIDs operated by the router AP as well as a BSSID of a BSS operated by the extender AP connected to the router AP (S1419). Specifically, the router AP may generate a BSSID list that includes the BSSIDs operated by the AP as well as a BSSID of a BSS operated by the extender AP connected to the router AP (S1419). In this case, the router AP may upload the BSSID list to the cloud server (S1421). The router AP periodically updates the BSSID list and determines when the BSSID list is changed. When the BSSID list has been changed, the router AP uploads the BSSID list to the cloud server (S1423, S1425). As described above, multiple extender APs may be connected to the router AP. Even in this case, the above-described embodiments may be applied.

As described above, the present invention has been described using wireless LAN communication as an example. However, the present invention is not limited thereto and may be equally applied to other communication systems, such as cellular communication. Furthermore, although the method, the device, and the system of the present invention have been described in relation to specific embodiments, some or all of the elements and operations of the present invention may be implemented using a computer system having a general-purpose hardware architecture.

The features, structures, effects, etc. described in the above embodiments are included in at least an embodiment of the present invention, and are not necessarily limited to an embodiment. Furthermore, the features, structures, effects, etc. exemplified in each embodiment may be combined or modified for other embodiments by those skilled in the art to which the embodiments belong.

The above description has been made with reference to embodiments. However, these are only examples and do not limit the present invention, and those skilled in the art to which the present invention pertains will recognize that various modifications and applications beyond those exemplified herein are possible without departing from the essential characteristics of the embodiments disclosed herein. For example, each element specifically shown in the embodiments may be modified and implemented within the scope of the present invention defined in the appended claims.

## Claims

1. A server (20) for receiving detected information from an access point, AP (30), for performing motion detection by using a wireless LAN signal, the server comprising:
a memory; and
a processor, **characterised in that** the processor is configured to:
receive, from the AP (30), an identifier of a basic service set, BSS, operated by the AP;
receive, from a user application (10), an identifier of a BSS associated with a station in which the user application operates;
pair the AP with a user of the user application in case that the identifier of the BSS received from the AP is identical to the identifier received from the user application; and
transmit, to the user application, information about a motion detection result received from the AP.

2. The server (20) of claim 1, wherein the AP (30) is not paired with the user of the user application in case that an administrator identifier, ID, and a password transmitted by the user application do not match an administrator ID and a password of the AP (30).

3. The server (20) of claim 1, wherein the identifier of the BSS is a BSSID.

4. The server (20) of claim 1, wherein the processor is configured to receive, from the AP, a user identifier of the user paired with the AP along with the motion detection result.

5. The server (20) of claim 1, wherein the processor is configured to pair, in case that the AP is a router AP configured to manage a mesh network, all Aps included in the mesh network with one user.

6. The server (20) of claim 5, wherein the processor is configured to, in case that the AP is a router AP configured to manage a mesh network, receive, from the router AP, not only a BSSID operated by the router AP but also a BSSID operated by an extender AP connected to the router AP, receive the BSSID operated by the extender AP from the extender AP, and pair the extender AP with a user paired with the router AP that has transmitted a BSSID identical to the BSSID received from the extender AP.

7. The server (20) of claim 1, wherein the processor is configured to:
transmit an authentication code to an application of the user paired to the AP in case that a user application of a user other than the user paired with the AP requests pairing with the AP (30) from the server (20); and
pair the other user with the AP (30) in case that the user application of the other user transmits the authentication code.

8. The server (20) of claim 1, wherein the processor is configured to:
set at least one of multiple stations associated with the AP (30) as a sensing node; and
set a threshold value which is criteria for a motion detection based on a place in which the sensing node is located.

9. The server (20) of claim 1, wherein the processor is configured to designate, in case that a first AP, which is one of multiple stations associated with the AP (30), has been set as a sensing node configured to transmit a measurement result underlying motion detection, a second AP instead of the first AP as the sensing node based on a magnitude of a received signal strength indicator, RSSI, of a signal transmitted by the first AP.

10. The server (20) of claim 9, wherein the processor is configured to designate the second AP instead of the first AP as the sensing node in case that the first AP, which is one of the multiple stations associated with the AP (30), has been set as the sensing node configured to transmit the measurement result underlying the motion detection and that the magnitude of the RSSI of the signal transmitted by the first AP is less than a predetermined threshold value.

11. A method of operating a server (20) for receiving detected information from an access point, AP, for performing motion detection by using a wireless LAN signal, the method **characterised by**:
receiving, from the AP, an identifier of a basic service set, BSS, operated by the AP (30);
receiving, from a user application (10), an identifier of a BSS associated with a station in which the user application operates;
pairing the AP (30) with a user of the user application in case that the identifier of the BSS received from the AP (30) is identical to the identifier received from the user application; and
transmitting, to the user application, information about a motion detection result received from the AP (30).

12. The method of claim 11, wherein the AP (30) is not paired with the user of the user application in case that an administrator identifier, ID, and a password transmitted by the user application do not match an administrator ID and a password of the AP (30).

13. The method of claim 11, wherein the identifier of the BSS is a BSSID.

14. The method of claim 11, further comprising receiving, from the AP (30), a user identifier of the user paired with the AP (30) along with the motion detection result.

15. The method of claim 11, wherein the pairing of the AP (30) with the user of the user application comprises pairing, in case that the AP (30) is a router AP configured to manage a mesh network, all APs included in the mesh network with one user.

## Patentansprüche

1. Server (20) zum Empfangen von erkannten Informationen von einem Access Point, AP, (30) zum Durchführen einer Bewegungsdetektion unter Verwendung eines drahtlosen LAN-Signals, wobei der Server aufweist:
einen Speicher; und
einen Prozessor,
**dadurch gekennzeichnet, dass** der Prozessor ausgelegt ist zum:
Empfangen, von dem AP (30), einer Kennung eines von dem AP betriebenen Basic Service Set (BSS);
Empfangen, von einer Benutzeranwendung (10), einer Kennung eines BSS, der einer Station zugeordnet ist, in der die Benutzeranwendung arbeitet;
Paaren des AP mit einem Benutzer der Benutzeranwendung, wenn die von dem AP empfangene Kennung des BSS mit der von der Benutzeranwendung empfangenen Kennung identisch ist; und
Senden, an die Benutzeranwendung, von Informationen über ein von dem AP empfangenes Bewegungsdetektionsergebnis.

2. Server (20) nach Anspruch 1, wobei der AP (30) nicht mit dem Benutzer der Benutzeranwendung gepaart wird, wenn eine Administrator-Kennung (ID) und ein Passwort, die von der Benutzeranwendung gesendet werden, nicht mit einer Administrator-ID und einem Passwort des AP (30) übereinstimmen.

3. Server (20) nach Anspruch 1, wobei die Kennung des BSS eine BSSID ist.

4. Server (20) nach Anspruch 1, wobei der Prozessor dazu ausgelegt ist, von dem AP eine Benutzerkennung des mit dem AP gepaarten Benutzers zusammen mit dem Bewegungsdetektionsergebnis zu empfangen.

5. Server (20) nach Anspruch 1, wobei der Prozessor dazu ausgelegt ist, wenn der AP ein Router-AP ist, der für die Verwaltung eines vermaschten Netzes ausgelegt ist, alle in dem vermaschten Netz enthaltenen APs mit einem Benutzer zu paaren.

6. Server (20) nach Anspruch 5, wobei der Prozessor dazu ausgelegt ist, wenn der AP ein Router-AP ist, der für die Verwaltung eines vermaschten Netzes ausgelegt ist, von dem Router-AP nicht nur eine von dem Router-AP betriebene BSSID, sondern auch eine von einem mit dem Router-AP verbundenen Extender-AP betriebene BSSID zu empfangen, die von dem Extender-AP betriebene BSSID von dem Extender-AP zu empfangen und den Extender-AP mit einem Benutzer zu paaren, der mit dem Router-AP gepaart ist, der eine BSSID gesendet hat, die mit der von dem Extender-AP empfangenen BSSID identisch ist.

7. Server (20) nach Anspruch 1, wobei der Prozessor ausgelegt ist zum:
Senden eines Authentifizierungscodes an eine Anwendung des mit dem AP gepaarten Benutzers, wenn eine Benutzeranwendung eines anderen Benutzers als des mit dem AP gepaarten Benutzers von dem Server (20) eine Paarung mit dem AP (30) anfordert; und
Paaren des anderen Benutzers mit dem AP (30), wenn die Benutzeranwendung des anderen Benutzers den Authentifizierungscode sendet.

8. Server (20) nach Anspruch 1, wobei der Prozessor ausgelegt ist zum:
Einstellen mindestens einer von mehreren dem AP (30) zugeordneten Stationen als Sensorknoten; und
Einstellen eines Schwellenwerts, der ein Kriterium für eine Bewegungsdetektion ist, auf Grundlage eines Ortes, an dem sich der Sensorknoten befindet.

9. Server (20) nach Anspruch 1, wobei der Prozessor dazu ausgelegt ist, wenn ein erster AP, der eine von mehreren dem AP (30) zugeordneten Stationen ist, als Sensorknoten eingestellt wurde, der dazu ausgelegt ist, ein der Bewegungsdetektion zugrunde liegendes Messergebnis zu senden, einen zweiten AP anstelle des ersten AP als Sensorknoten auf Grundlage der Größe eines Received Signal Strength Indicators (RSSI) eines von dem ersten AP gesendeten Signals einzustellen.

10. Server (20) nach Anspruch 9, wobei der Prozessor dazu ausgelegt ist, den zweiten AP anstelle des ersten AP als Sensorknoten zu bestimmen, wenn der erste AP, der eine der mehreren dem AP (30) zugeordneten Stationen ist, als Sensorknoten eingestellt wurde, der dazu ausgelegt ist, das der Bewegungsdetektion zugrunde liegende Messergebnis zu senden, und die Größe des RSSI des von dem ersten AP gesendeten Signals kleiner als ein vorbestimmter Schwellenwert ist.

11. Verfahren zum Betreiben eines Servers (20) zum Empfangen von erkannten Informationen von einem Access Point, AP, zum Durchführen einer Bewegungsdetektion unter Verwendung eines drahtlosen LAN-Signals, wobei das Verfahren **gekennzeichnet ist durch**:
Empfangen, von dem AP, einer Kennung eines von dem AP (30) betriebenen Basic Service Set (BSS);
Empfangen, von einer Benutzeranwendung (10), einer Kennung eines BSS, der einer Station zugeordnet ist, in der die Benutzeranwendung arbeitet;
Paaren des AP (30) mit einem Benutzer der Benutzeranwendung, wenn die von dem AP (30) empfangene Kennung des BSS mit der von der Benutzeranwendung empfangenen Kennung identisch ist; und
Senden, an die Benutzeranwendung, von Informationen über ein von dem AP (30) empfangenes Bewegungsdetektionsergebnis.

12. Verfahren nach Anspruch 11, wobei der AP (30) nicht mit dem Benutzer der Benutzeranwendung gepaart wird, wenn eine Administrator-Kennung (ID) und ein Passwort, die von der Benutzeranwendung gesendet werden, nicht mit einer Administrator-ID und einem Passwort des AP (30) übereinstimmen.

13. Verfahren nach Anspruch 11, wobei die Kennung des BSS eine BSSID ist.

14. Verfahren nach Anspruch 11, das ferner das Empfangen, von dem AP (30), einer Benutzerkennung des mit dem AP (30) gepaarten Benutzers zusammen mit dem Bewegungsdetektionsergebnis aufweist.

15. Verfahren nach Anspruch 11, wobei das Paaren des AP (30) mit dem Benutzer der Benutzeranwendung das Paaren aller in dem vermaschten Netz enthaltenen APs mit einem Benutzer aufweist, wenn der AP (30) ein Router-AP ist, der zur Verwaltung eines vermaschten Netzes ausgelegt ist.

## Revendications

1. Serveur (20) destiné à recevoir des informations détectées provenant d'un point d'accès, PA (30), pour effectuer une détection de mouvement à l'aide d'un signal de réseau local sans fil, le serveur comprenant :
une mémoire ; et
un processeur,
**caractérisé en ce que** le processeur est configuré pour :
recevoir, en provenance du PA (30), un identifiant d'un ensemble de services de base, BSS, exploité par le PA ;
recevoir, en provenance d'une application utilisateur (10), un identifiant d'un BSS associé à une station dans laquelle l'application utilisateur fonctionne ;
apparier le PA avec un utilisateur de l'application utilisateur dans le cas où l'identifiant du BSS reçu du PA est identique à l'identifiant reçu de l'application utilisateur ; et
transmettre, à l'application utilisateur, des informations relatives à un résultat de détection de mouvement reçu du PA.

2. Serveur (20) selon la revendication 1, dans lequel le PA (30) n'est pas apparié avec l'utilisateur de l'application utilisateur dans le cas où un identifiant administrateur et un mot de passe transmis par l'application utilisateur ne correspondent pas à un identifiant administrateur et à un mot de passe du PA (30).

3. Serveur (20) selon la revendication 1, dans lequel l'identifiant du BSS est un identifiant BSSID.

4. Serveur (20) selon la revendication 1, dans lequel le processeur est configuré pour recevoir, en provenance du PA, un identifiant d'utilisateur de l'utilisateur apparié avec le PA conjointement avec le résultat de détection de mouvement.

5. Serveur (20) selon la revendication 1, dans lequel le processeur est configuré pour apparier, dans le cas où le PA est un point d'accès routeur configuré pour gérer un réseau maillé, tous les PA inclus dans le réseau maillé avec un utilisateur.

6. Serveur (20) selon la revendication 5, dans lequel le processeur est configuré pour, dans le cas où le PA est un point d'accès routeur configuré pour gérer un réseau maillé, recevoir, du point d'accès routeur, non seulement un identifiant BSSID exploité par le point d'accès routeur mais également un identifiant BSSID exploité par un point d'accès d'extension connecté au point d'accès routeur, recevoir l'identifiant BSSID exploité par le point d'accès d'extension à partir du point d'accès d'extension, et apparier le point d'accès d'extension avec un utilisateur apparié avec le point d'accès routeur qui a transmis un identifiant BSSID identique à l'identifiant BSSID reçu du point d'accès d'extension.

7. Serveur (20) selon la revendication 1, dans lequel le processeur est configuré pour
transmettre un code d'authentification à une application de l'utilisateur apparié au PA dans le cas où une application utilisateur d'un utilisateur autre que l'utilisateur apparié avec le PA demande, au serveur (20), un appairage avec le PA (30) ; et
apparier l'autre utilisateur avec le PA (30) dans le cas où l'application utilisateur de l'autre utilisateur transmet le code d'authentification.

8. Serveur (20) selon la revendication 1, dans lequel le processeur est configuré pour
définir au moins une station parmi une pluralité de stations associées au PA (30) comme nœud de détection ; et
définir une valeur de seuil qui constitue un critère pour une détection de mouvement sur la base d'un lieu dans lequel le nœud de détection est situé.

9. Serveur (20) selon la revendication 1, dans lequel le processeur est configuré pour désigner, dans le cas où un premier PA, qui est l'une de multiples stations associées au PA (30), a été défini comme nœud de détection configuré pour transmettre un résultat de mesure sur lequel repose la détection de mouvement, un second PA au lieu du premier PA comme nœud de détection sur la base d'une amplitude d'un indicateur de puissance du signal reçu, RSSI, d'un signal transmis par le premier PA.

10. Serveur (20) selon la revendication 9, dans lequel le processeur est configuré pour désigner le second PA au lieu du premier PA comme nœud de détection dans le cas où le premier PA, qui est l'une des multiples stations associées au PA (30), a été défini comme nœud de détection configuré pour transmettre le résultat de mesure sur lequel repose la détection de mouvement et où l'amplitude du RSSI du signal transmis par le premier PA est inférieure à une valeur de seuil prédéterminée.

11. Procédé de fonctionnement d'un serveur (20) pour recevoir des informations détectées en provenance d'un point d'accès, PA, pour effectuer une détection de mouvement à l'aide d'un signal de réseau local sans fil, le procédé étant **caractérisé en ce qu'**il comprend les étapes consistant à :
recevoir, en provenance du PA, un identifiant d'un ensemble de services de base, BSS, exploité par le PA (30) ;
recevoir, en provenance d'une application utilisateur (10), un identifiant d'un BSS associé à une station dans laquelle l'application utilisateur fonctionne ;
apparier le PA (30) avec un utilisateur de l'application utilisateur dans le cas où l'identifiant du BSS reçu du PA (30) est identique à l'identifiant reçu de l'application utilisateur ; et
transmettre, à l'application utilisateur, des informations relatives à un résultat de détection de mouvement reçu du PA (30).

12. Procédé selon la revendication 11, dans lequel le PA (30) n'est pas apparié avec l'utilisateur de l'application utilisateur dans le cas où un identifiant administrateur et un mot de passe transmis par l'application utilisateur ne correspondent pas à un identifiant administrateur et à un mot de passe du PA (30).

13. Procédé selon la revendication 11, dans lequel l'identifiant du BSS est un identifiant BSSID.

14. Procédé selon la revendication 11, comprenant en outre l'étape consistant à recevoir, du PA (30), un identifiant d'utilisateur de l'utilisateur apparié avec le PA (30) conjointement avec le résultat de détection de mouvement.

15. Procédé selon la revendication 11, dans lequel l'appairage du PA (30) avec l'utilisateur de l'application utilisateur comprend l'étape consistant à apparier, dans le cas où le PA (30) est un point d'accès routeur configuré pour gérer un réseau maillé, tous les PA inclus dans le réseau maillé avec un utilisateur.
